**Europäisches Patentamt**

**European Patent Office**

**Office européen des brevets**

(19)

(11) Veröffentlichungsnummer : **0 191 118
B1**

(12) **EUROPÄISCHE PATENTSCHRIFT**

(45) Veröffentlichungstag der Patentschrift :
30.09.87

(51) Int. Cl.⁴ : **B 60 N** 1/12, B 60 R 22/10

(21) Anmeldenummer : 85101397.9

(22) Anmeldetag : 09.02.85

(54) **Kindersicherungseinrichtung in Fahrzeugen.**

(43) Veröffentlichungstag der Anmeldung :
20.08.86 Patentblatt 86/34

(45) Bekanntmachung des Hinweises auf die Patenterteilung : 30.09.87 Patentblatt 87/40

(84) Benannte Vertragsstaaten :
DE FR GB IT SE

(56) Entgegenhaltungen :
EP-A- 0 094 318
DE-A- 3 019 153
FR-A- 2 280 531
FR-A- 2 310 902
FR-A- 2 338 675
US-A- 3 232 665
US-A- 3 424 497
US-A- 3 945 678

(73) Patentinhaber : Römer-Britax Autogurte GmbH
Blaubeurer Strasse 35-37
D-7900 Ulm/Donau (DE)

ADAC e.V.
Am Westpark 8
D-8000 München (DE)

(72) Erfinder : Klanner, Wilfried, Dipl.-Ing.
Jahnstrasse 35a
D-8130 Starnberg (DE)
Erfinder : Schmaier, Dieter Helmut, Dipl.-Ing.
Am Schwaigfeld 16
D-8037 Olching (DE)
Erfinder : Wetter, Hermann
Alpenstrasse 60
D-7900 Ulm (DE)
Erfinder : Felsch, Bernhard, Dipl.-Ing.
Schwabbruckerstrasse 19
D-8193 Münsind (DE)
Erfinder : Czernakowski, Waldemar
Ferdinand-Sauerbruch-strasse 3
D-7906 Blaustein (DE)

(74) Vertreter : Fay, Hermann, Dipl.-Phys. Dr.
Ensingerstrasse 21 Postfach 1767
D-7900 Ulm (Donau) (DE)

## Beschreibung

Die Erfindung betrifft eine Kindersicherungseinrichtung in Fahrzeugen, insbes. Kraftfahrzeugen, mit einem auf einen Fahrzeugsitz aufsetzbaren Sitzteil und einer Rückhaltevorrichtung, die einen dem Fahrzeugsitz zugeordneten Sicherheitsgurt aufweist, der quer über dem Sitzteil und beidseits desselben mit seitlichen Gurtteilen schräg nach hinten und unten zu Befestigungspunkten am Fahrzeug verläuft. Dabei kann die Rückhaltevorrichtung mit oder ohne Fangkörper ausgestattet sein, der — wenn er vorhanden ist, — mit Abstand über dem Sitzteil angeordnet und durch den Sicherheitsgurt gegen die bei einem Unfall auftretenden Trägheitskräfte des Kindes gehalten und gesichert ist.

Bei einer aus der DE-A-3 019 153 bekannten Kindersicherungseinrichtung dieser Art mit Fangkörper ist dieser am Sitzteil gehalten und in seiner Lage relativ zum Sitzteil entsprechend der Größe des Kindes in der Höhe und vor und zurück in Sitzrichtung verstellbar. Er ist etwa U-förmig gebogen und mit seinen abwärts gerichteten U-Schenkeln auf dem Sitzteil abgesetzt, sowie mit im wesentlichen vertikalen Befestigungsstangen versehen, die in Führungen des Sitzteiles eingeschoben sind. Um eine Anpassung an unterschiedliche Größen der Kinder zu ermöglichen, sind mehrere in Sitzrichtung hintereinander liegende Führungen für die Befestigungsstangen vorgesehen. Außerdem sind die Befestigungsstangen mit Kerben ausgestattet, durch die eine Fixierung des Fangkörpers auch in verschiedenen Höhen durch entsprechende Rasteinrichtungen in den die Befestigungsstangen aufnehmenden Führungen des Sitzteiles erfolgen kann. Zwar ist es mit Hilfe dieser Befestigungsstangen und der sie aufnehmenden Führungen möglich, den Fangkörper relativ zum Sitzteil abgestuft entsprechend der Größe des Kindes in der Höhe und in Sitzrichtung vor und zurück passend einzustellen, jedoch geht diese Einstellung jeweils beim Abnehmen des Fangkörpers vom Sitzteil, um beispielsweise das Kind in die Kindersicherungseinrichtung hineinzusetzen oder aus ihr herauszunehmen, verloren, und sie muß stets aufs neue eingestellt werden, wenn der Fangkörper bei sitzendem Kind neu auf das Sitzteil aufgesteckt wird. Das erfordert jedes Mal Sorgfalt und Aufmerksamkeit. Der Sicherheitsgurt ist in seinem über das Sitzteil verlaufenden Bereich nur am Fangkörper geführt. Es besteht daher keine Möglichkeit, nur das Sitzteil ohne den Fangkörper zu verwenden, weil dann der Sicherheitsgurt bezüglich seines Verlaufs am kindlichen Körper nicht festgelegt werden könnte und der in Bezug auf das Kind optimale Verlauf des Sicherheitsgurtes in keiner Weise gewährleistet wäre.

Aus der europäischen Patentanmeldung EP-A-0 094 318 ist eine Kindersicherungseinrichtung ohne Fangkörper bekannt, bei der das Sitzteil beidseits Armlehnen bildende Wangen aufweist, in welchen je eine Führungsaufnahme für den Sicherheitsgurt vorgesehen ist, so daß Lage und Verlauf des Sicherheitsgurtes durch die Führungsaufnahmen am Sitzteil festgelegt sind. Diese Führungsaufnahmen liegen in den Wangen sehr tief, um am Sitzteil einen entsprechend tiefen und damit sicherungstechnisch besonders vorteilhaften Gurtverlauf zu erhalten. Das kann aber mit dem seitlichen Schloß des Sicherheitsgurtes zu Schwierigkeiten führen, wenn das Schloß kraftfahrzeugbedingt zu hoch am Sicherheitsgurt angeordnet ist, daher außen an der Wange anschlägt und dadurch den freien Durchlauf des Sicherheitsgurtes durch die Führungsaufnahme behindert und dadurch das sicherheitstechnisch notwendige Straffen des Gurtes nicht zuläßt. Eine Anpassung der Höhe der Führungsaufnahme an die Lage des Gurtschlosses aber ist nicht möglich, um diesen Nachteil zu vermeiden.

Der Erfindung liegt die Aufgabe zugrunde, eine Kindersicherungseinrichtung der eingangs genannten Art so auszubilden, daß die Rückhaltevorrichtung, insbes. also der Sicherheitsgurt und/oder der Fangkörper, am Sitzteil so gehalten ist, daß die Rückhaltevorrichtung in einfacher Weise einstellbar ist und auch nach wiederholtem Aus- und Einsteigen des Kindes ihre einmal sicherungstechnisch für optimal erkannte und eingestellte Lage zwangsweise immer wieder einnimmt, so daß eine jedesmalige Neueinstellung und Überprüfung dieser Lage entfällt.

Diese Aufgabe wird nach der Erfindung dadurch gelöst, daß beidseits am Sitzteil je ein die Lage der Rückhaltevorrichtung über dem Sitzteil festlegender Haltearm angeordnet und jeder Haltearm zum Zweck seiner in Bezug auf das Kind sicherungstechnisch optimalen Einstellung in einer am Sitzteil vorgesehenen Führung etwa in Richtung des Verlaufs der seitlichen Gurtteile verschiebbar und in der Führung gegen Verschwenken gesichert sowie in seiner jeweiligen Verschiebungsstellung feststellbar ist.

Durch Verstellung der Haltearme in ihren in der Regel in der Höhe schräg von hinten unten nach vorn oben etwa parallel zu den seitlichen Gurtteilen verlaufenden Führungen am Sitzteil kann die Lage des über dem Sitzteil verlaufenden Gurtbereichs mit oder ohne Fangkörper in Bezug auf das Sitzteil sowohl in der Höhe als auch vor und zurück in der Sitzrichtung des Kindes eingestellt werden, so daß die Lage des Fangkörpers und-/oder der Gurtverlauf den durch die Größe des jeweiligen Kindes und durch die Anordnung des Gurtschlosses innerhalb des Sicherheitsgurtes bestimmten sicherungstechnischen Erfordernissen optimal entspricht, insbesondere also auch der Lauf des Sicherheitsgurtes durch das Gurtschloß nicht beeinträchtigt werden kann. Diese Einstellung der Haltearme bleibt erhalten, wenn das Kind ein- oder aussteigt und zu diesem Zweck der Sicherheitsgurt bzw. der Fangkörper nach dem Lösen des Gurtes von mindestens einem der Haltearme abgenommen bzw. abgehoben oder abgeschwenkt wird, um freien Zugang zum Sitzteil zu schaffen. Dadurch wird erreicht, daß der Fangkörper mit seiner dem Sicherheitsgurt zugeordneten Krafteinleitungszone nach der einmaligen Grundeinstellung der Haltearme auf ein bestimmtes Kind beim täglichen Ein- und Aussteigen immer wieder zwangsweise, gleichsam automatisch, die einmal eingestellte optimale Position zum Sitzteil und zu dem zu sichernden Kind einnimmt, und daß bei fehlendem Fangkörper die entsprechend der Höhenlage des Gurtschlosses im Sicherheitsgurt eingestellten Haltearme Beeinträchtigungen des Gurtlaufes durch das Gurtschloß immer zuverlässig verhindern.

Für den Fall fehlenden Fangkörpers ist jeder Haltearm gurtseitig mit einer Führungsaufnahme für den Sicherheitsgurt ausgebildet, die den Sicherheitsgurt über das Sitzteil umlenkt und in Richtung zum Kind hin gegen Abrutschen vom Haltearm sichert. Der Haltearm wird dann so eingestellt, daß die Führungsaufnahme möglichst tief, jedoch noch hoch genug über dem seitlichen Gurtschloß liegt. An mindestens einem der Haltearme ist die Führungsaufnahme so ausgebildet, daß der Sicherheitsgurt quer zu seiner Längsrichtung in die Führungsaufnahme eingelegt, bzw. ihr entnommen werden kann, wie es zum Ein- und Aussteigen des Kindes erforderlich ist. Wird die Kindersicherungseinrichtung in Verbindung mit einem das Sitzteil mit Abstand übergreifenden Fangkörper verwendet, so tragen die Haltearme gurtseitig den Fangkörper, der in bekannter Weise vom Sicherheitsgurt übergriffen und dadurch gegen beim Unfall auftretende Trägheitskräfte des Kindes gehalten ist. Zwar besteht die Möglichkeit, für die Führungsaufnahme, bzw. den Fangkörper jeweils eigene Haltearme vorzusehen, diese Haltearme also gegebenenfalls am Sitzteil auszutauschen, jedoch ist eine im Rahmen der Erfindung bevorzugte Ausführungsform der Kindersicherungseinrichtung dadurch gekennzeichnet, daß die Haltearme gurtseitig je einen sich etwa horizontal in Fahrtrichtung erstreckenden Zapfen aufweisen, der die Führungsaufnahme für den Sicherheitsgurt nach oben begrenzt und an dem der Fangkörper anschließbar ist, so daß mit oder ohne Fangkörper stets dieselben Haltearme verwendbar sind. Dabei ist eine besonders vorteilhafte Ausführungsform dadurch gekennzeichnet, daß bei einer Rückhaltevorrichtung ohne Fangkörper der Zapfen nur mit dem in Fahrtrichtung hinteren Zapfenende und bei einer Rückhaltevorrichtung mit Fangkörper mit beiden Zapfenenden am Haltearm lösbar befestigt ist, wobei der Zapfen im ersten Fall über die Führungsaufnahme frei vorkragt und im zweiten Fall die Führungsaufnahme überbrückt. Die Zapfen für den Fangkörper und die Zapfen für den Sicherheitsgurt ohne Fangkörper können gegeneinander ausgewechselt werden. Zweckmäßig ist der Fangkörper am Zapfen des einen Haltearms schwenkbar um die Zapfenachse gelagert und am Zapfende anderen Haltearms in Schwenkrichtung ein- und ausrastbar ist. Weiter empfiehlt es sich, daß der Fangkörper nach unten offene, quer zur Zapfenachse auf die Zapfen aufsteckbare Haltebügel aufweist, deren Schenkel wenigstens an einem der Haltebügel mittels Spannglieder über den Zapfen gegeneinander verspannbar sind, so daß die Lagerreibung des Fangkörpers auf dem als Schwenkachse dienen Zapfen nach Wunsch mehr oder weniger fest eingestellt werden kann.

Nach einem weiteren Vorschlag der Erfindung empfiehlt es sich, die beiden Haltearme in ihren Führungen am Sitzteil durch ein sie verbindendes Getriebe gleichlaufend miteinander zu koppeln, so daß ihre Verstellung stets gemeinsam erfolgt und Verkantungen der Haltearme in den Führungen ausgeschlossen sind. Eine in dieser Hinsicht bevorzugte Ausführungsform ist dadurch gekennzeichnet, daß das Getriebe eine in Richtung der Führungen quer zu sich selbst im Sitzteil verschiebbare Welle aufweist, die sich zwischen den Haltearmen erstreckt und an den Haltearmen gelagert ist, und die im Bereich der Führungen je ein verdrehungsfest auf der Welle sitzendes Zahnrad trägt, wobei die Zahnräder mit je einer am Sitzteil festen Zahnleiste kämmen, die sich entlang der jeweiligen Führung erstreckt. Wird daher einer der Haltearme in seiner Führung über einen bestimmten Weg verschoben, bewirkt die Welle den Antrieb des anderen Führungsarmes um genau denselben Verschiebungsweg.

Die Feststellung der Haltearme in den Führungen kann im Prinzip auf formschlüssige oder kraftschlüssige Weise erfolgen. Insbesondere empfiehlt es sich allerdings, für diese Feststellung der Haltearme Klemmglieder vorzusehen, die die Haltearme im Reibungssitz am Sitzteil verspannen. Dann können sich die Haltearme im Unfallgeschehen, wenn die Haftreibungskraft des Klemmsitzes überschritten wird, in ihren Führungen gegen entsprechende Gleitreibungskräfte verschieben, wodurch das System aus Sitzteil und Haltearmen eine irreversible Änderung erfährt, die mit ihrer Energievernichtung zum Abbau von Kraftspitzen der auf das Kind einwirkenden Rückhaltekräfte beiträgt. Im übrigen wird durch diese Verschiebung der Haltearme der Sicherheitsgurt bzw. der Fangkörper relativ zum Kind tiefer und fester in die Beckenbeuge des kindlichen Körper hineingezogen, was eine Verbesserung des dynamischen Bewegungsablaufes im Unfallgeschehen durch Reduzierung der Vorverlagerung bringt. In konstruktiver und bedienungstechnischer Hinsicht ist eine besonders bevorzugte Ausführungsform dadurch gekennzeichnet, daß ein beiden Haltearmen gemeinsames Klemmglied in Form einer Spannstange vorgesehen ist, die mit dem einen Ende zugfest am einen Haltearm sitzt und am anderen Ende ein von Hand betätigbares Spannstück aufweist, das eine Verspannung der Spannstange gegen den an diesem Spannstangenende befindlichen anderen Haltearm ermöglicht. Das Spannstück kann ein unmittelbar an der Spannstange gelagerter und gegen den Haltearm abgestützter Exzenter sein. Es besteht aber auch die Möglichkeit, daß die Spannstange spannstückseitig ein Widerlager trägt, zwischen dem und dem zweiten Haltearm das Spannstück abgestützt ist, das diesem Haltearm oder dem Widerlager über eine Spannfläche anliegt, die sich in Betätigungsrichtung des Spannstücks erstreckt und in Längsrichtung der Spannstange verläuft. Das Spannstück ist dann zweckmäßig als auf der Spannstange gelagerte Spannhülse und die Spannfläche als steilgängige Schraubenwindung ausgebildet. Die Spannstange zieht die beiden Haltearme quer zu Führungsrichtung im Spannzustand fest in ihre Führungen am Sitzteil, und es genügt eine geringfügige Stellbewegung des Spannstücks, um die Spannstange zu spannen bzw. zu lösen. Im Fall einer Kopplung beider Haltearme durch die schon erwähnte Welle ist diese zweckmäßig hohl und die Spannstange erstreckt sich durch die hohle Welle hindurch, wobei die Welle auf der Spannstange gelagert ist.

Die Führung der Haltearme am Sitzteil ist vorzugsweise durch Führungsnuten einerseits und in die Führungsnuten greifende Führungsleisten andererseits gebildet, wobei sich die Führungsleisten und Führungsnuten in Führungsrichtung erstrecken. Von besonderem Vorteil ist es, die Führungsleisten und Führungsnuten im Profil keilförmig auszubilden und zu mehreren nebeneinander anzuordnen. Es ergibt sich dann eine besonders günstige Verspannung der Haltearme am Sitzteil durch die angezogene Spannstange, weil sich der Klemmsitz zwischen den Haltearmen und dem Sitzteil an den keilförmigen Führungsflächen der Führungsleisten bzw. Führungsnuten ausbilden kann.

Im folgenden wird die Erfindung an in der Zeichnung dargestellten Ausführungsbeispielen näher erläutert ; es zeigen :

Figur 1 eine erfindungsgemäße Kindersicherungseinrichtung in Seitenansicht,

Figur 2 die Kindersicherungseinrichtung nach Fig. 1 in Vorderansicht,

Figur 3 die Kindersicherungseinrichtung nach Fig. 1 in einem späteren Stadium eines typischen Unfallgeschehens,

Figur 4 eine andere Ausführungsform der erfindungsgemäßen Kindersicherungseinrichtung in Seitenansicht entsprechend Fig. 1,

Figur 5 den Gegenstand der Fig. 4 in Vorderansicht,

Figur 6 das Sitzteil und den Fangkörper der Kindersicherungseinrichtung nach Fig. 1 und 2 ohne Fahrzeugsitz, Sicherheitsgurt und Kind,

Figur 7 eine Teilansicht des Gegenstandes der Fig. 6 in Richtung des dort eingetragenen Pfeiles VII,

Figur 8 einen Schnitt in Richtung VIII-VIII durch den Gegenstand der Fig. 6,

Figur 9 eine Ansicht des Gegenstandes der Fig. 8 in Richtung des dort eingetragenen Pfeiles IX,

Figur 10 eine andere Ausführungsform der Kindersicherungseinrichtung in Seitenansicht,

Figur 11 einen Schnitt durch die Sicherungseinrichtung nach Fig. 10 in einer der Fig. 8 entsprechenden Darstellung.

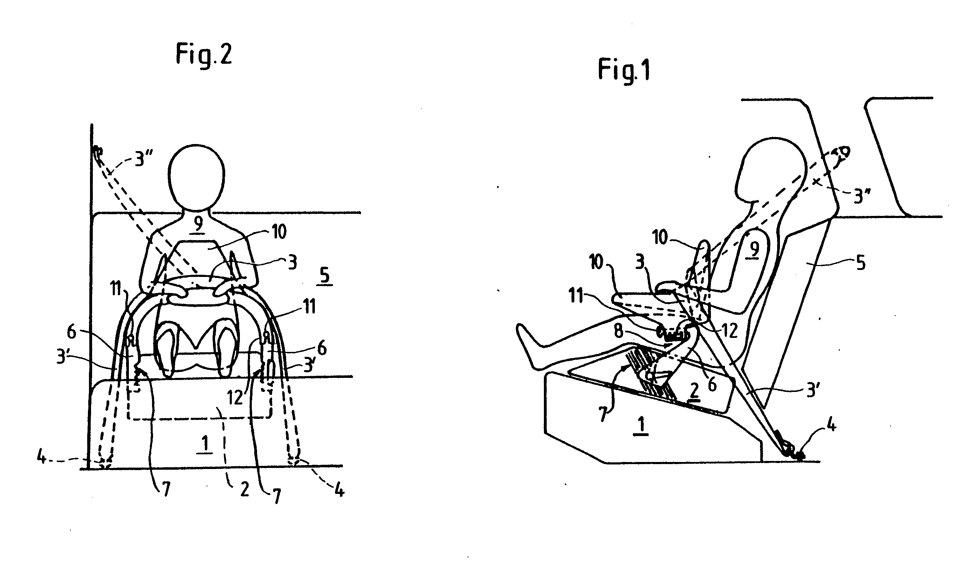

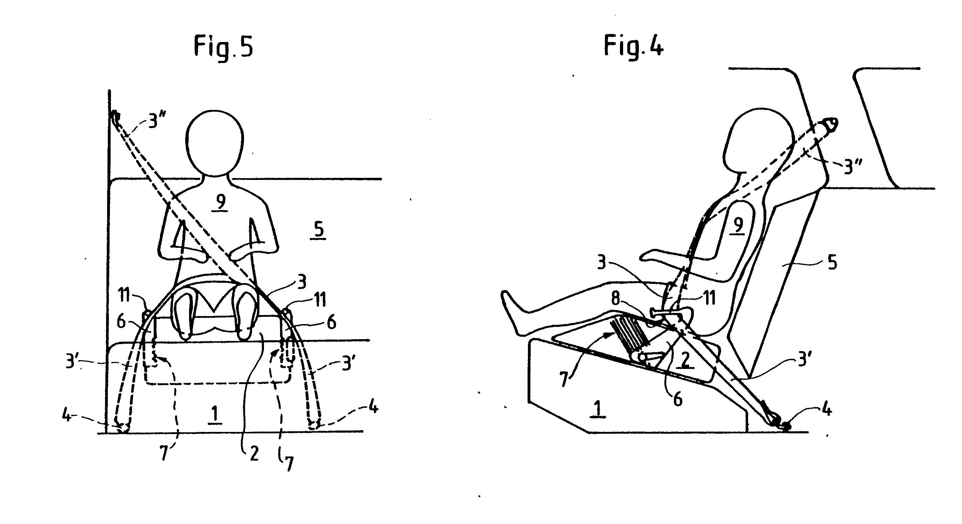

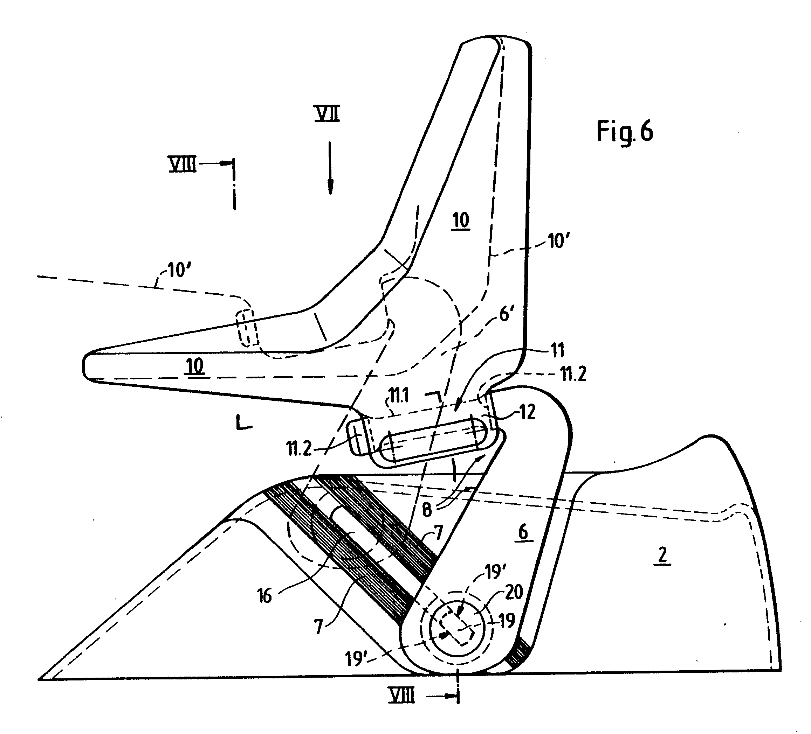

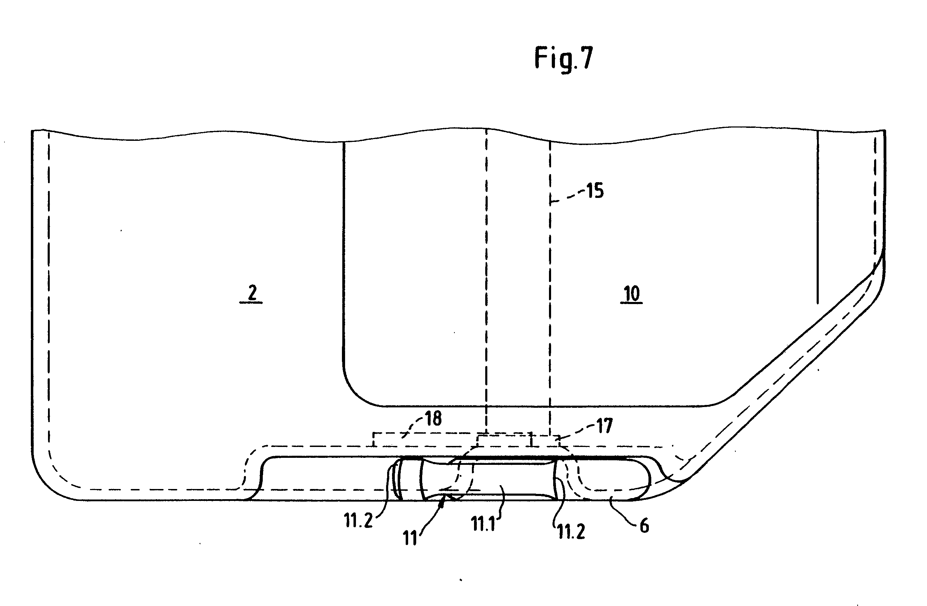

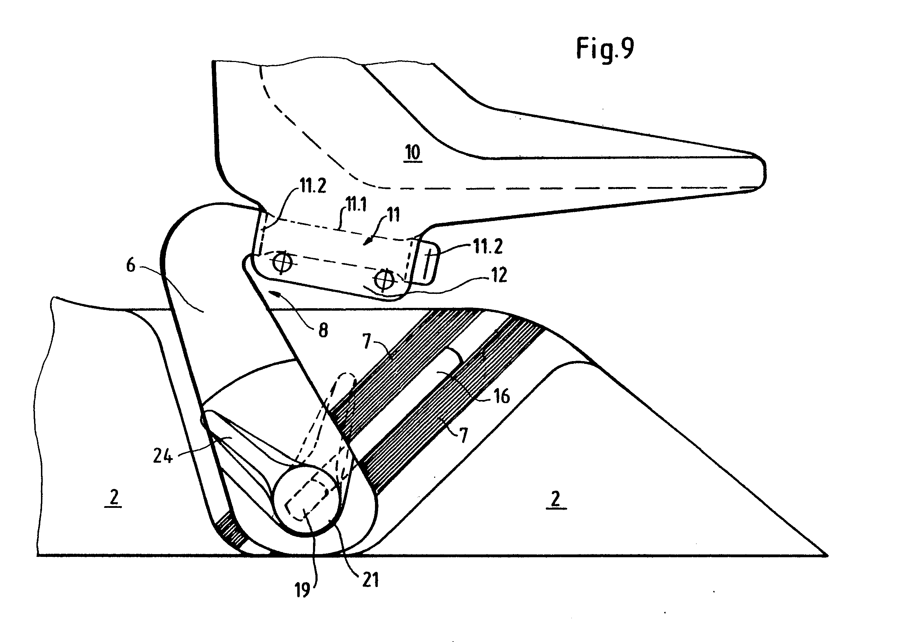

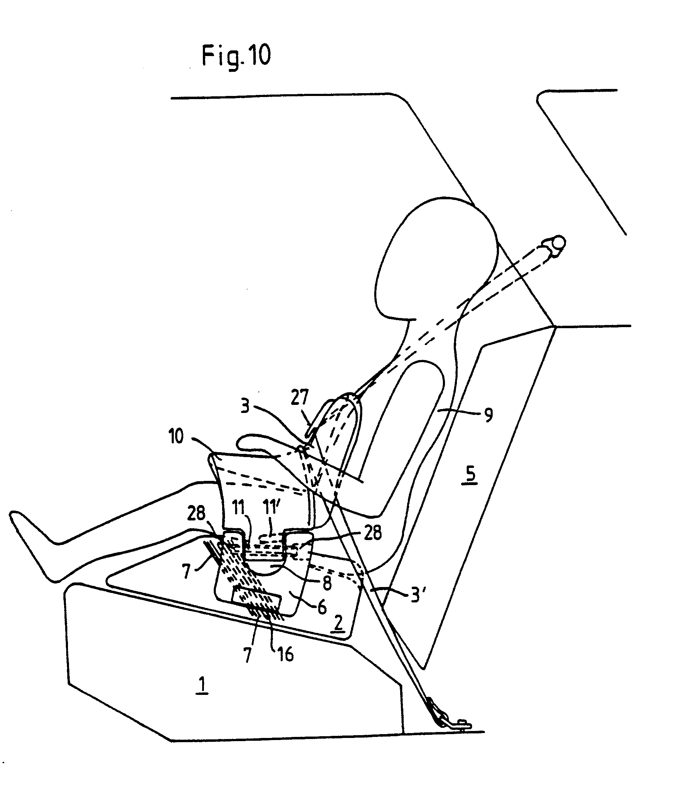

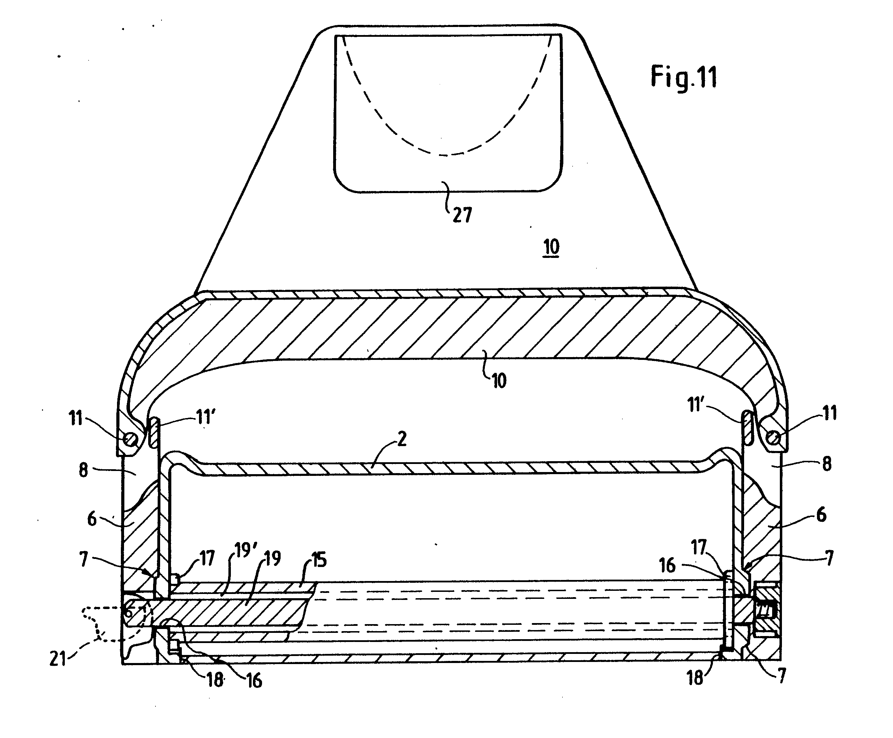

Die in der Zeichnung dargestellten Kindersicherungseinrichtungen in Kraftfahrzeugen besitzen einen auf einen Fahrzeugsitz 1 aufsetzbaren Sitzteil 2 und einen dem Fahrzeugsitz zugeordneten Sicherheitsgurt 3, der quer über das Sitzteil 2 und beidseits desselben mit seitlichen Gurtteilen 3' schräg nach hinten und unten zu Befestigungspunkten 4 am Fahrzeug verläuft. Die Lehne des Fahrzeugsitzes ist mit 5 bezeichnet. Beidseits am Sitzteil 2 ist je ein Haltearm 6 angeordnete. Diese Haltearme 6 legen den Verlauf des Sicherheitsgurtes 3 über das Sitzteil 2 fest. Jeder Haltearm 6 ist zu seiner in Bezug auf das Kind sicherungstechnisch optimalen Einstellung in einer seitlich am Sitzteil 2 vorgesehenen Führung 7 verschiebbar. Diese Führung 7 verläuft in der Höhe schräg von hinten unten nach vorn oben etwa parallel zu den seitlichen Gurtteilen 3'. Die Haltearme 6 sind in ihrer jeweiligen Führung 7 gegen Verschwenken gesichert und in ihrer jeweils gewählten Verschiebungsstellung in noch später zu beschreibender Weise feststellbar. Die Führung 7 liegt in Fahrtrichtung vor den seitlichen Gurtteilen 3'. Der Haltearm 6 erstreckt sich in der Ausführungsform nach den Fig. 1 bis 9 von der Führung 7 rückwärts und schräg aufwärts gegen den Sicherheitsgurt 3 und verläuft in etwa quer zur Richtung der Führung 7 und zur Laufrichtung der seitlichen Gurtteile 3'. Im Ausführungsbeispiel nach den Fig. 9 und 10 sind die Haltearme 6 im Umriß nach Art eines Bügels mit nach oben gerichteter Bügelöffnung ausgebildet. Jeder Haltearm 6 ist gurtseitig mit einer Führungsaufnahme 8 für den Sicherheitsgurt 3 ausgebildet. Der Sicherheitsgurt 3 läuft im Ausführungsbeispiel nach den Fig. 4 und 5 in Gurtlängsrichtung frei durch die Führungsaufnahme 8, die den Sicherheitsgurt 3 über das Sitzteil 2 in Richtung zum Kind 9 hin umlenkt und gegen ein Abrutschen vom Haltearm 6 sichert. Entgegengerichtet zu den im Unfallgeschehen auftretenden Rückhaltekräften sind die Führungsaufnahmen 8 offen, so daß der Sicherheitsgurt 3 quer zu seiner Laufrichtung in die Führungsaufnahmen 8 eingelegt, bzw. den Führungsaufnahmen 8 entnommen werden kann, damit das Kind 9 ein- bzw. aussteigen kann. In den anderen Figuren tragen die Haltearme 6 gurtseitig einen das Sitzteil 2 mit Abstand übergreifenden Fangkörper 10, über den hinweg der Sicherheitsgurt 3 verläuft, so daß der Fangkörper 10 am Sicherheitsgurt 3 gegen die im Unfallgeschehen auftretenden Trägheitskräfte des Kindes 9 gehalten ist. Es bleibt dem Benutzer überlassen, die Sicherungseinrichtung mit oder ohne Fangkörper 10 an den Haltearmen 6 zu verwenden. Die Haltearme 6 tragen gurtseitig je einen sich etwa horizontal in Fahrtrichtung erstreckenden Zapfen 11, der die Führungsaufnahmen 8 nach oben begrenzt und an dem der Fangkörper 10 angeschlossen werden kann. Es genügt, den Zapfen 11 nur mit dem in Fahrtrichtung hinteren Ende am Haltearm 6 anzuschließen, wie dies in Fig. 1 bis 9 der Fall ist, wo der Zapfen 11 im Winkel mit dem Haltearm 6 die Führungsaufnahme 8 bildet. Der Zapfen 11 kann aber auch wie in den Fig. 10 und 11 mit beiden Zapfenenden am Haltearm 6 befestigt sein, und zwar dann, wenn er nur zum Anschluß des Fangkörpers 10 dient. Dann ist für die Sicherung des Sicherheitsgurtes 3 in der Führungsaufnahme 8 zweckmäßig ein eigener Zapfen 11' vorgesehen, und der Zapfen 11 für den Fangkörper 10 ist lös- und abnehmbar, wenn die Kindersicherungseinrichtung. ohne den Fangkörper 10 Verwendung findet. Der Zapfen 11' kragt frei über die Führungsaufnahme 8 vor, während der Zapfen 11 sie überbrückt. Im einzelnen können die Zapfen 11 abschnittsweise wie bei 11.1 kreiszylindrisch ausgebildet sein. Der Fangkörper 10 ist am Zapfen 11 des im Ausführungsbeispiel linken Haltearms 6 schwenkbar um die Zapfenachse gelagert. Am Zapfen 11 des anderen, rechten Haltearms 6 ist der Fangkörper 10 in Schwenkrichtung ein- und ausrastbar. Zu seinem Anschluß am Zapfen 11 kann entsprechend den Fig. 1 bis 9 der Fangkörper 10 nach unten offene, quer zur Zapfenachse auf die Zapfen 11 aufsteckbare Haltebügel 12 besitzen. Die Schenkel 13 des linken Haltebügels 12 können mittels Spannglied 14 über den Zapfen 11 gegeneinander verspannt werden. An beiden Enden des kreiszylindrischen Zapfenteils 11.1 befinden sich im Querschnitt erweiterte Zapfenteile 11.2, die ein Abrutschen des Fangkörpers 10 in Richtung der Zapfenachse verhindern. Der oder die Zapfen 11 können aber auch entsprechend den Fig. 10 und 11 fester Bestandteil des Fangkörpers 10 sein und abnehmbar in Lagerschalen 28 der Haltearme 6 gelagert sein, wenn zur Sicherung des Gurtes 3 eigene Zapfen 11' vorgesehen sind. Als Sicherheitsgurt 3 kann ein Beckengurt in Zweipunktbefestigung oder ein Becken-Schultergurt in Dreipunktbefestigung in Frage kommen, dessen Schulterschrägteil 3'' in der Zeichnung jeweils punktiert dargestellt und für sich noch am Fangkörper 10 in einem nach unten offenen Sicherungshaken 27 gehalten ist.

Die beiden Haltearme 6 sind in ihren Führungen 7 durch ein sie verbindendes Getriebe gleichlaufend miteinander gekoppelt. Dieses Getriebe enthält eine hohle Welle 15, die in Richtung der Führungen 7 quer zu sich selbst im Sitzteil 2 verschiebbar ist. Die Welle 15 erstreckt sich zwischen den Haltearmen 6 und ist auf einer noch zu beschreibenden Spannstange 19 an den Haltearmen 6 gelagert. Ferner trägt die Welle 15 im Bereich der Führungen 7, in den Ausführungsbeispielen innenseitig am Sitzteil 2, je ein verdrehungsfest auf der Welle sitzendes Zahnrad 17. Beide Zahnräder kämmen mit je einer am Sitzteil 2 festen Zahnleiste 18, die sich entlang der jeweiligen Führung 7 erstreckt. Beide Haltearme 6 müssen somit stets dieselben Verschiebungswege durchlaufen, so daß sie bezüglich ihrer Einstellung in ihren Führungen 7 zwangsweise übereinstimmen. Zur Feststellung der Haltearme 6 in ihren Führungen 7 ist ein beiden Haltearmen 6 gemeinsames Klemmglied vorgesehen, das die Verspannung der Haltearme 6 im Reibungssitz am Sitzteil 2 ermöglicht. Das Klemmglied wird von der Spannstange 19 gebildet, die undrehbar in Aussparungen 16 des Sitzteils 2 quer zu sich selbst verschiebbar geführt ist, wozu sie mit Flachflächen 19' versehen ist, die an den Rändern der Aussparungen 16 anliegen, welche als zur Richtung der Führungen 7 parallele Schlitze ausgebildet sind. Die Spannstange 19 sitzt weiter mit ihren Enden an den Haltearmen 6, nämlich mit dem einen Ende bei 20 zugfest am linken Haltearm 6, und am anderen Ende trägt sie ein von Hand betätigbares Spannstück 22, das in den Fig. 10 und 11 ein am Spannstangenende gelagerter Exzenter ist, der sich mit seiner exzentrisch verlaufenden Spannfläche 23 am rechten Haltearm 6 abstützt. In den anderen Figuren trägt die Spannstange 19 zunächst ein Widerlager 21. Zwischen diesem Widerlager 21 und dem rechten Haltearm 6 ist das Spannstück 22 abgestützt, das einerseits dem Widerlager 21 und andererseits wiederum über eine sich in Betätigungsrichtung erstreckende Spannfläche 23 dem Haltearm 6 anliegt. Das Spannstück 22 ist dabei als auf der Spannstange 19 gelagerte Spannhülse und die Spannfläche 23 als steilgängige Schraubenwindung ausgebildet. Die Betätigung des Spannstücks 22 erfolgt über einen fest damit verbundenen Spannhebel 24. Durch geringfügiges Verstellen des Spannstückes 22 in der einen oder anderen Stellrichtung kann die Spannstange 19 gespannt und gelöst und damit entsprechend die Verklemmung der Tragarme 6 am Sitzteil 2 hergestellt oder aufgehoben werden. Die Spannstange 19 wird am linken Haltearm 6 durch eine Stellmutter 20 gehalten, durch deren Verdrehung die Spannlänge der Spannstange 19 dem Abstand der Tragarme voneinander genau angepaßt werden kann.

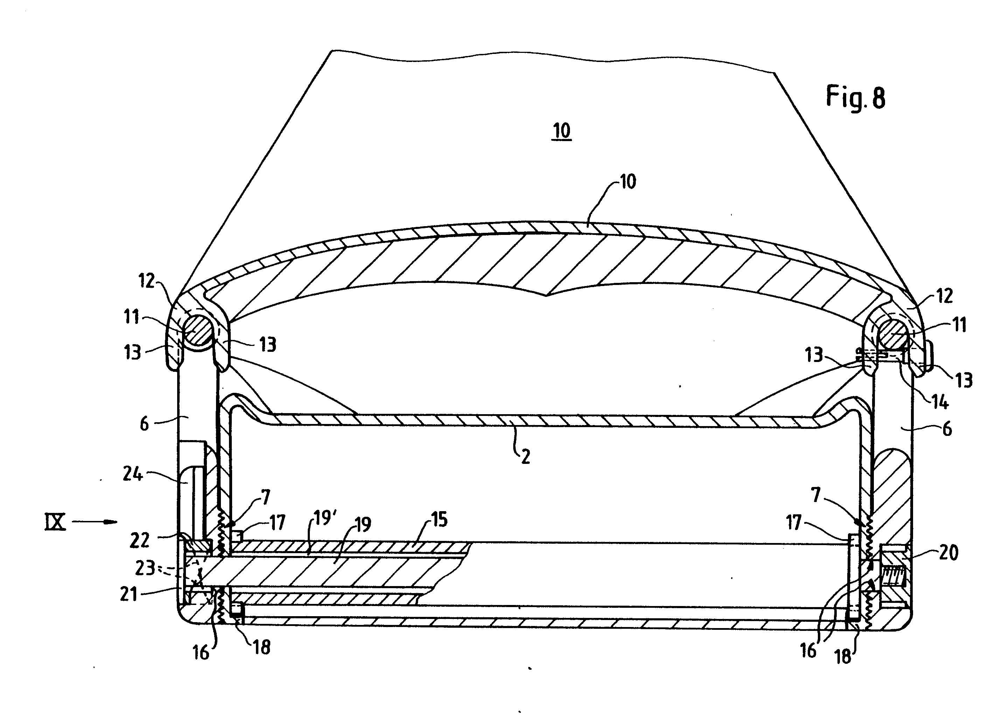

Die Führung 7 der Haltearme 6 am Sitzteil 2 ist durch Führungsnuten einerseits und in die Führungsnuten greifende Führungsleisten andererseits gebildet. Diese Führungsleisten und Führungsnuten erstrecken sich in Führungsrichtung. Sie sind im Profil keilförmig ausgebildet und als einzelnes Paar wie in Fig. 10 und 11 oder, wie in den anderen Figuren, zu mehreren unmittelbar nebeneinander angeordnet, so daß sie im Profil (Fig. 8) eine Keilverzahnung bilden und beim Anziehen der Spannstange 19 der Klemmsitz der Haltearme 6 am Sitzteil 2 über die Keilflächender Führungsleisten bzw. Führungsnuten erfolgt.

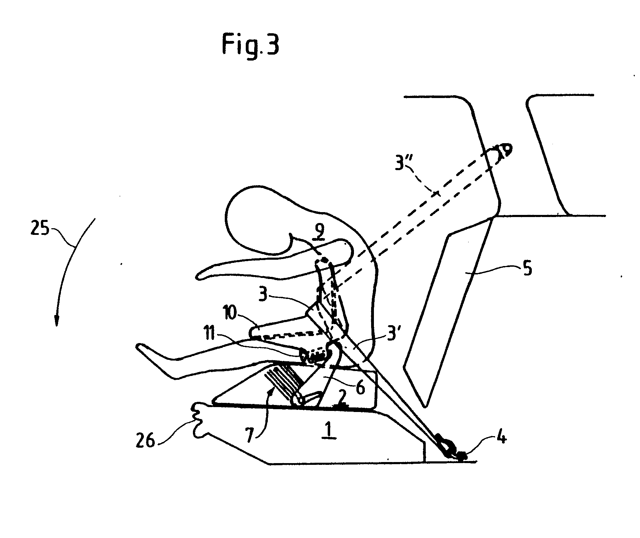

Wenn im Unfallgeschehen der Sicherheitsgurt 3, ob nun direkt oder über den dazwischen liegenden Fangkörper 10, durch das Kind 9 belastet wird, verlagert sich das Gesamtsystem aus Kind 9, Fangkörper 10 und Sitzteil 2 auf dem Fahrzeugsitz 1 entsprechend der auftretenden Gurtdehnung nach vorn und gleichzeitig erfolgt eine Verschwenkung des Gesamtsystems nach vorn und unten in Richtung des in Fig. 3 eingetragenen Pfeiles 25, so daß der Fahrzeugsitz 1 zusammengedrückt wird, wie dies in Fig. 3 bei 26 angedeutet ist. Gleichzeitig können sich die Haltearme 6 in ihrer Führung 7 entsprechend Fig. 3 nach hinten und unten verschieben, wenn die Rückhaltekräfte dazu führen, daß die Haftreibungskräfte zwischen dem Sitzteil 2 und den an ihm verklemmten Haltearmen 6 überschritten wird. Die Verschiebung der Haltearme 6 erfolgt dann gegen die in der Führung 7 wirksamen Gleitreibungskräfte, so. daß durch die Reibung eine. Energiedissipation stattfindet, die ähnlich wie die Gurtdehnung zum Abbau von Kraftspitzen bei der Sicherung des Kindes dient. Durch die Verschiebung der Haltearme 6 in der Führung 7 rückwärts und nach unten wird im übrigen der Gefahr vorgebeugt, daß Sitzteil 2 und Kind 9 beim Unfall unter dem Sicherheitsgurt nach vorn hindurchrutschen können.

**Patentansprüche .**

1. Kindersicherungseinrichtung in Fahrzeugen, insbesondere Kraftfahrzeugen, mit einem auf einen Fahrzeugsitz (1) aufsetzbaren Sitzteil (2) und einer Rückhaltevorrichtung, die einen dem Fahrzeugsitz (1) zugeordneten Sicherheitsgurt (3) aufweist, der quer über dem Sitzteil (2) und beidseits desselben mit seitlichen Gurtteilen (3') schräg nach hinten und unten zu Befestigungspunkten (4) am Fahrzeug verläuft, dadurch gekennzeichnet, daß beidseits am Sitzteil (2) je ein die Lage der Rückhaltevorrichtung über dem Sitzteil (2) festlegender Haltearm (6) angeordnet und jeder Haltearm (6) zum Zweck seiner in Bezug auf das Kind (9) sicherungstechnisch optimalen Einstellung in einer am Sitzteil (2) vorgesehenen Führung (7) etwa in Richtung des Verlaufs der seitlichen Gurtteile verschiebbar und in der Führung (7) gegen Verschwenken gesichert sowie in seiner jeweiligen Verschiebungsstellung feststellbar ist.

2. Kindersicherungseinrichtung nach Anspruch 1, dadurch gekennzeichnet, daß jeder Haltearm (6) gurtseitig mit einer Führungsaufnahme (8) für den Sicherheitsgurt (3) ausgebildet ist, die den Sicherheitsgurt (3) über das Sitzteil (2) umlenkt und in Richtung zum Kind (9) hin gegen Abrutschen vom Haltearm (6) sichert.

3. Kindersicherungseinrichtung nach Anspruch 1 oder 2, dadurch gekennzeichnet, daß die Haltearme (6) gurtseitig einen mit Abstand über dem Sitzteil (2) angeordneten Fangkörper (10) tragen, der vom Sicherheitsgurt (3) übergriffen und dadurch gegen beim Unfall auftretende Trägheitskräfte des Kindes (9) gehalten ist.

4. Kindersicherungseinrichtung nach den Ansprüchen 1 bis 3, dadurch gekennzeichnet, daß die Haltearme (6) gurtseitig je einen sich etwa horizontal in Fahrtrichtung erstreckenden Zapfen (11) aufweisen, der die Führungsaufnahme (8) für den Sicherheitsgurt (3) nach oben begrenzt und an dem der Fangkörper (10) anschließbar ist.

5. Kindersicherungseinrichtung nach Anspruch 4, dadurch gekennzeichnet, daß bei einer Rückhalteeinrichtung ohne Fangkörper (10) der Zapfen (11) nur mit dem in Fahrtrichtung hinteren Zapfenende und bei einer Rückhaltevorrichtung mit Fangkörper (10) mit beiden Zapfenenden am Haltearm (6) lösbar befestigt ist, wobei der Zapfen (11) im ersten Fall über die Führungsaufnahme (8) frei vorkragt und im zweiten Fall die Führungsaufnahme (8) überbrückt.

6. Kindersicherungseinrichtung nach Anspruch 4 oder 5, dadurch gekennzeichnet, daß der Fangkörper (10) am Zapfen (11) des einen Haltearms (6) schwenkbar um die Zapfenachse gelagert und am Zapfen (11) des anderen Haltearms (6) in Schwenkrichtung ein- und ausrastbar ist.

7. Kindersicherungseinrichtung nach Anspruch 6, dadurch gekennzeichnet, daß der Fangkörper (10) nach unten offene, quer zur Zapfenachse auf die Zapfen (11) aufsteckbare Haltebügel (12) aufweist, deren Schenkel (13) wenigstens an einem der Haltebügel (12) mittels Spannglieder (14) über den Zapfen (11) gegeneinander verspannbar sind.

8. Kindersicherungseinrichtung nach einem der Ansprüche 1 bis 7, dadurch gekennzeichnet, daß die beiden Haltearme (6) in ihren Führungen (7) am Sitzteil (2) durch ein sie verbindendes Getriebe gleichlaufend miteinander gekoppelt sind.

9. Kindersicherungseinrichtung nach Anspruch 8, dadurch gekennzeichnet, daß das Getriebe eine in Richtung der Führungen (7) quer zu sich selbst im Sitzteil (2) verschiebbare Welle (15) aufweist, die sich zwischen den Haltearmen (6) erstreckt und an den Haltearmen (6) gelagert ist, und die im Bereich der Führungen (7) je ein verdrehungsfest auf der Welle (15) sitzendes Zahnrad (17) trägt, wobei die Zahnräder (17) mit je einer am Sitzteil (2) festen Zahnleiste (18) kämmen, die sich entlang der jeweiligen Führung (7) erstreckt.

10. Kindersicherungseinrichtung nach einem der Ansprüche 1 bis 9, dadurch gekennzeichnet, daß zur Feststellung der Haltearme (6) in ihren Führungen (7) Klemmglieder vorgesehen sind, die die Haltearme (6) im Reibungssitz am Sitzteil (2) verspannen.

11. Kindersicherungseinrichtung nach Anspruch 10, dadurch gekennzeichnet, daß ein beiden Haltearmen (6) gemeinsames Klemmglied in Form einer Spannstange (19) vorgesehen ist, die mit dem einen Ende zugfest am einen Haltearm sitzt und am anderen Ende ein von Hand betätigbares Spannstück (22) aufweist, das eine Verspannung der Spannstange (19) gegen den anderen Haltearm (6) ermöglicht.

12. Kindersicherungseinrichtung nach Anspruch 11, dadurch gekennzeichnet, daß die Spannstange (19) spannstückseitig ein Widerlager (21) trägt, zwischen dem und dem zweiten Haltearm das Spannstück (22) abgestützt ist, das diesem Haltearm oder dem Widerlager über eine Spannfläche (23) anliegt, die sich in Betätigungsrichtung des Spannstücks (22) erstreckt und in Längsrichtung der Spannstange (19) verläuft.

13. Kindersicherungseinrichtung nach Anspruch 12, dadurch gekennzeichnet, daß das Spannstück (22) als auf der Spannstange (19) gelagerte Spannhülse und die Spannfläche (23) als steilgängige Schraubenwindung ausgebildet ist.

14. Kindersicherungseinrichtung nach den Ansprüchen 9 und 11, dadurch gekennzeichnet, daß die Welle (15) hohl ausgebildet ist und die Spannstange (19) sich durch die hohle Welle (15) erstreckt, wobei die Welle (15) auf der Spannstange (19) gelagert ist.

15. Kindersicherungseinrichtung nach einem der Ansprüche 1 bis 14, dadurch gekennzeichnet, daß die Führung (7) der Haltearme (6) am Sitzteil (2) durch Führungsnuten einerseits und in die Führungsnuten greifende Führungsleisten anderseits gebildet ist, die sich in Führungsrichtung erstrecken.

16. Kindersicherungseinrichtung nach Anspruch 15, dadurch gekennzeichnet, daß die Führungsleisten und Führungsnuten im Profil keilförmig ausgebildet und zu mehreren nebeneinander angeordnet sind.

17. Kindersicherungseinrichtung nach einem der Ansprüche 1 bis 16, dadurch gekennzeichnet, daß bei einer Rückhaltevorrichtung mit Fangkörper (10) dieser einen mit der Öffnung nach unten zeigenden Sicherungshaken (27) zur Aufnahme eines Schulterschrägteils (3″) des Sicherheitsgurtes (3) aufweist.

## Claims

1. A child restraint arrangement in vehicles, in particular motor vehicles, comprising a seat portion (2) which can be fitted on to a vehicle seat (1), and a retaining device having a safety belt (3) which is associated with the vehicle seat (1) and which extends transversely over the seat portion (2) and on both sides thereof with lateral belt portions (3′) inclinedly rearwardly and downwardly to fixing points (4) on the vehicle charac-terised in that arranged on both sides on the seat portion (1) are respective holding arms (6) which fix the position of the retaining device over the seat portion (2) and, for the purposes of optimum adjustment of each holding arm (6) in regard to securing the child (9) each holding arm (6) is displaceable in a guide (7) provided on the seat portion (2) substantially in the direction in which the lateral belt portions extend and is secured against pivotal movement in the guide (7) and can be fixed in its respective position of displacement.

2. A child restraint arrangement according to claim 1 characterised in that each holding arm (6) is provided on the belt side with a guide receiving means (8) for the safety belt (3), which diverts the safety belt (3) over the seat portion (2) and prevents it from slipping off the holding arm (6) towards the child (9).

3. A child restraint arrangement according to claim 1 or claim 2 characterised in that on the belt side the holding arms (6) carry a catch body (10) which is arranged at a spacing above the seat portion (2) and over which the safety belt (3) passes and which is thereby held against inertia forces, which occur in an accident, on the part of the child (9).

4. A child restraint arrangement according to claims 1 to 3 characterised in that on the belt side the holding arms (6) each have a pin (11) which extends substantially horizontally in the direction of travel and which delimits in an upward direction the guide receiving means (8) for the safety belt (3) and to which the catch body (10) can be connected.

5. A child restraint arrangement according to claim 4 characterised in that, in the case of a retaining device without catch body (10), the pin (11) is releasably secured to the holding arm (6) only with the end of the pin which is the rearward end in the direction of travel and, in the case of a retaining device with a catch body (10), the pin (11) is releasably secured to the holding arm (6) with both ends of the pin, wherein in the former case the pin (11) projects freely beyond the guide receiving means (8) and in the second case it bridges over the guide receiving means (8).

6. A child restraint arrangement according to claim 4 or claim 5 characterised in that the catch body (10) is mounted on the pin (11) of the one holding arm (6) pivotably about the pin axis and can be latched to and unlatched from the pin (11) of the other holding arm (6) in the direction of pivotal movement.

7. A child restraint arrangement according to claim 6 characterised in that the catch body (10) has downwardly open holding stirrups (12) which can be fitted on to the pins (11) transversely with respect to the pin axis and whose limbs (13) can be clamped towards each other over the pin (11), at least at one of the holding stirrups (12), by means of clamping members (14).

8. A child restraint arrangement according to one of claims 1 to 7 characterised in that the two holding arms (6) are coupled together for synchronous movement in their guides (7) on the seat portion (2) by a transmission means connecting them.

9. A child restraint arrangement according to claim 8 characterised in that the transmission means comprises a shaft (15) which is displaceable in the direction of the guides (7) transversely with respect to itself in the seat portion (2) and which extends between the holding arms (6) and is mounted thereto, and which in the region of each of the guides (7) carries a gear (17) which is nonrotatably mounted on the shaft (15), wherein each of the gears (17) meshes with a respective toothed rack (18) which is fixed on the seat portion (2) and which extends along the respective guide (7).

10. A child restraint arrangement according to one of claims 1 to 9 characterised in that to fix the holding arms (6) in their guides (7), there are provided clamping members which clamp the holding arms (6) in a condition of frictional engagement on the seat portion (2).

11. A child restraint arrangement according to claim 10 characterised in that there is provided a clamping member which is common to both holding arms (6), in the form of a clamping bar (19) which is mounted with one end to one holding arm in such a way as to resist a tensile force and which at the other end has a manually actuable clamping member (22) which permits the clamping bar (19) to be braced relative to the other holding arm (6).

12. A child restraint arrangement according to claim 11 characterised in that the clamping bar (19), at the clamping member end, carries a support (21) between which and the second holding arm is supported the clamping member (22), which bears against said holding arm or the support (21) by way of a clamping face (23) which extends in the direction of actuation of the clamping member (22) and which is disposed in the longitudinal direction of the clamping bar (19).

13. A child restraint arrangement according to claim 12 characterised in that the clamping member (22) is in the form of a clamping sleeve which is mounted on the clamping bar (19) and the clamping face (23) is in the form of a coarse screwthread turn.

14. A child restraint arrangement according to claims 9 and 11 characterised in that the shaft (15) is hollow and the clamping bar (19) extends through the hollow shaft (15), the shaft (15) being mounted on the clamping bar (19).

15. A child restraint arrangement according to one of claims 1 to 14 characterised in that the guide (7) of the holding arms (6) on the seat portion (2) is formed by guide grooves on the one hand and guide bars on the other hand, which engage into the guide grooves and which extend in the guide direction.

16. A child restraint arrangement according to claim 15 characterised in that the guide bars and the guide grooves are of a wedge-shaped configuration in profile and are arranged in pluralities in juxtaposed relationship.

17. A child restraint arrangement according to one of claims 1 to 16 characterised in that, in the case of a retaining device with a catch body (10), said catch body has a securing hook (27) which faces downwardly with its opening, to receive an inclined shoulder portion (3″) of the safety belt (3).

**Revendications**

1. Dispositif de sécurité pour enfants placé dans des véhicules, notamment des véhicules automobiles, comportant un élément de siège (2) pouvant être installé sur un siège de véhicule (1) et un dispositif de retenue, qui comporte une ceinture de sécurité (3) associée au siège (1) du véhicule et qui s'étend transversalement au-dessus de l'élément de siège (2) et des deux côtés de ce dernier et comporte des éléments latéraux de ceinture (3′) s'étendant obliquement vers l'arrière et vers le bas en direction de points de fixation (4) situés sur le véhicule, caractérisé en ce que des bras respectifs de maintien (6), qui fixent la position du dispositif de retenue au-dessus de l'élément de siège (2), sont disposés des deux côtés de cet élément de siège et que chaque bras de maintien (6) est déplaçable, en vue de son réglage optimal du point de vue de la technique de sécurité en rapport avec l'enfant (9), dans un guide (7), prévu sur l'élément de siège (2), approximativement dans la direction dans laquelle s'étendent les éléments latéraux de ceinture, et peut être fixé dans le guide (7) avec blocage contre tout pivotement et ainsi que dans sa position respective de déplacement.

2. Dispositif de sécurité pour enfants selon la revendication 1, caractérisé en ce que chaque bras de maintien (6) comporte, côté ceinture, un évidement de guidage (8) qui est prévu dans la ceinture de sécurité (3) et qui renvoie la ceinture de sécurité (3) par-dessus l'élément de siège (2) et l'empêche de se dégager par glissement en direction de l'enfant (9) à partir du bras de maintien (6).

3. Dispositif de sécurité pour enfants selon la revendication 1 ou 2, caractérisé en ce que les bras de maintien (6) portent, côté ceinture, un organe d'arrêt (10), qui est situé à distance au-dessus de l'élément de siège (2) et par-dessus lequel passe la ceinture de sécurité (3) et qui est maintenu de ce fait à l'encontre de l'action des forces d'inertie de l'enfant (9), qui apparaissent en cas d'accident.

4. Dispositif de sécurité pour enfants selon les revendications 1 à 3, caractérisé en ce que les bras de maintien (6) comportent chacun, côté ceinture, une broche (11) qui s'étend approximativement horizontalement dans la direction de déplacement et limite vers le haut l'évidement de guidage (8) prévu pour la ceinture de sécurité (3) et à laquelle l'organe d'arrêt (10) peut être raccordé.

5. Dispositif de sécurité pour enfants selon la revendication 4, caractérisé en ce que, dans le cas d'un dispositif de retenue ne comportant pas l'organe d'arrêt (10), la broche (11) est fixée de façon détachable uniquement par son extrémité, située en arrière dans la direction de déplacement, et que dans le cas d'un dispositif de retenue comportant l'organe d'arrêt (10), la broche est fixée de façon détachable par ses deux extrémités sur le bras de maintien (6), la broche (11) faisant saillie librement au-dessus de l'évidement de guidage (8), dans le premier cas, et recouvrant l'évidement de guidage (8), dans le second cas.

6. Dispositif de sécurité pour enfants selon la revendication 4 ou 5, caractérisé en ce que l'organe d'arrêt (10) est monté sur la broche (11) d'un premier bras de maintien (6) de manière à pouvoir pivoter autour de l'axe de la broche et peut être encliqueté et désencliqueté dans la direction de pivotement, sur la broche (11) de l'autre bras de maintien (6).

7. Dispositif de sécurité pour enfants selon la revendication 6, caractérisé en ce que l'organe d'arrêt (10) comporte des étriers de maintien (12), qui sont ouverts vers le bas, peuvent être enfichés transversalement par rapport à l'axe des broches (11), sur ces dernières et dont les branches (13) peuvent être resserrées l'une vers l'autre, par-dessus les broches (11), au moins au niveau de l'un des étriers de maintien (12), à l'aide d'organes de serrage (14).

8. Dispositif de sécurité pour enfants selon l'une quelconque des revendications 1 à 7, caractérisé en ce que les deux bras de retenue (6) sont accouplés entre eux en étant parallèles, dans leurs guides (7) sur l'élément de siège (2), par un mécanisme qui les réunit.

9. Dispositif de sécurité pour enfants selon la revendication 8, caractérisé en ce que le mécanisme comporte un arbre (15) qui est déplaçable dans la direction des guides (7), transversalement par rapport à lui-même dans l'élément de siège (2), s'étend entre les bras de retenue (6), et est supporté par ces derniers et porte, dans la zone des guides (7), des pignons respectifs (17) montés avec blocage en rotation sur l'arbre (15), les pignons (17) engrenant avec des barrettes respectives formant crémaillères (18) qui sont montées fixes sur l'élément de siège (2) et s'étendent le long des guides respectifs (7).

10. Dispositif de sécurité pour enfants selon l'une quelconque des revendications 1 à 9, caractérisé en ce que pour la fixation des bras de maintien (6) dans leurs guides (7) il est prévu des organes de serrage qui serrent les bras de maintien (6) selon une liaison par frottement sur l'élément de siège (2).

11. Dispositif de sécurité pour enfants selon la revendication 10, caractérisé en ce qu'il est prévu un organe de blocage commun aux deux bras de maintien (6), réalisé sous la forme d'une barre de serrage (19), dont une extrémité repose, de manière à résister à la traction, sur un premier bras de maintien et dont l'autre extrémité comporte un organe de serrage (22) pouvant être actionné manuellement et qui permet un serrage de la barre de serrage (19) contre le second bras de maintien (6).

12. Dispositif de sécurité pour enfants selon la revendication 11, caractérisé en ce que la barre de serrage (19) porte, du côté de l'organe de serrage, une butée (21), que l'organe de serrage (22) est monté en étant en appui entre cette butée et le second bras de retenue et s'applique contre ce bras de maintien ou la butée par l'intermédiaire d'une surface de serrage (23) qui s'étend dans la direction d'actionnement de l'organe de serrage (22) et dans la direction longitudinale de la tige de serrage (19).

13. Dispositif de sécurité pour enfants selon la revendication 12, caractérisé en ce que l'organe de serrage (22) est réalisé sous la forme d'une douille de serrage montée sur la barre de serrage (19) et la surface de serrage (23) est réalisée avec une forme hélicoïdale à pas d'enroulement rapide.

14. Dispositif de sécurité pour enfants selon les revendications 9 et 11, caractérisé en ce que l'arbre (15) est creux et que la barre de serrage (19) s'étend à travers l'arbre creux (15), cet arbre (15) étant monté sur la barre de serrage (19).

15. Dispositif de sécurité pour enfants selon l'une quelconque des revendications 1 à 15, caractérisé en ce que le guide (7) des bras de maintien (6) dans l'élément de siège (2) est formé d'une part par des rainures de guidage et d'autre part par des barrettes de guidage s'engageant dans les rainures de guidage et qui s'étendent dans la direction de guidage.

16. Dispositif de sécurité pour enfants selon la revendication 15, caractérisé en ce que les barrettes de guidage et les rainures de guidage sont réalisées avec un profil en coin et sont disposées, à plusieurs, côte à côte.

17. Dispositif de sécurité pour enfants selon l'une quelconque des revendications 1 à 16, caractérisé en ce que, dans le cas d'un dispositif de retenue comportant le corps d'arrêt (10), ce dernier possède un crochet de sécurité (27), qui s'étend vers le bas à travers l'ouverture et sert à recevoir une partie oblique formant épaulement (3") de la ceinture de sécurité (3).

Fig.2

3"

9

10

3

5

11

11

6

6

3'

3'

12

4

7

2

7

4

Fig.1

10

10

3

9

5

11

8

12

6

3'

7

2

1

4

0 191 118

Fig.3

0 191 118

Fig.4

Fig.5

3

Fig.6

0 191 118

# Fig.7

0 191 118

Fig. 8

0 191 118

Fig.9

Fig.10

Fig.11